# EUROPEAN PATENT APPLICATION

(11) **EP 4 685 437 A1**
(43) Date of publication of application: **28.01.2026**
(21) Application number: 24382819.1
(22) Date of filing: 25.07.2024
(51) Int. Cl.: G01C 21/34, G06Q 10/02, G06Q 10/047, G06Q 50/47, G08G 5/00

(54) **PLANNED ROUTE DETERMINATION FOR AN AUTONOMOUS PASSENGER VEHICLE**

(71) Applicant: The Boeing Company, Arlington, VA 22202 (US)
(72) Inventor: PEÑA ORTIZ, Nicolas, 28042 MADRID (ES); BÜDDEFELD, Michael Christian, 63263 NEU-ISENBURG (DE); CORNEL, Miriam, 63263 NEU-ISENBURG (DE)
(74) Representative: ZBM Patents - Zea, Barlocci & Markvardsen

(57) **Abstract**

A first device includes one or more processors configured to receive, from a second device associated with a customer, a service request for a trip from a first location to a second location via an autonomous vehicle. The one or more processors are configured to access preferences for the trip, where one or more of the preferences include one or more preference scores. The one or more processors are configured to determine a route score associated with each of one or more potential routes for the trip based at least in part on the one or more preference scores. The one or more processors are configured to select a planned route from the one or more potential routes based on the route scores. The one or more processors are also configured to provide information associated with the planned route to the second device.

## Description

### FIELD OF THE DISCLOSURE

The present disclosure is generally related to planned route determination for an autonomous passenger vehicle (APV).

### BACKGROUND

Charter services enable people to schedule transportation in a vehicle from a start location to a destination location for one or more passengers. People that use charter services can have different needs, objectives, and desires for travel. For example, some people may be subject to motion sickness and may need particular accommodations in order to use a charter service, some people may have the objective of being at the destination as soon as possible, and other people may desire to see sights of interest during travel from the start location to the destination location. Developments in automation enable the use of autonomous vehicles as passenger vehicles for charters. APVs may include land vehicles (e.g., cars), aerial vehicles (e.g., vertical takeoff and landing (VTOL) vehicles), and water vehicles. For APVs, it is desirable for a person ordering the charter service to be able to specify preferences for a trip from the starting location to the destination.

### SUMMARY

In a particular implementation, a first device includes one or more processors configured to receive, from a second device associated with a customer, a service request for a trip from a first location to a second location via an autonomous vehicle. The one or more processors are configured to access preferences for the trip, where one or more of the preferences include one or more preference scores. The one or more processors are configured to determine a route score associated with each of one or more potential routes for the trip based at least in part on the one or more preference scores. The one or more processors are configured to select a planned route from the one or more potential routes based on the route scores. The one or more processors are also configured to provide information associated with the planned route to the second device.

In a particular implementation, a method includes receiving, at a computing device associated with an autonomous vehicle service provider from a second device associated with a customer, a service request for a trip from a first location to a second location. The method includes accessing, by the computing device, preferences for the trip, where one or more of the preferences include one or more preference scores. The method includes determining, by the computing device, a route score associated with each of one or more potential routes for the trip based at least in part on the one or more preference scores. The method includes selecting, by the computing device, a planned route from the one or more potential routes based on the route scores. The method also includes providing, by the computing device, information associated with the planned route to the second device.

In another particular implementation, a non-transitory computer-readable medium stores instructions that, when executed by one or more processors, cause the one or more processors to receive from a second device associated with a customer, a service request for a trip from a first location to a second location. The instructions cause the one or more processors to access preferences for the trip, where one or more of the preferences include one or more preference scores. The instructions cause the one or more processors to determine a route score associated with each of one or more potential routes for the trip based at least in part on the one or more preference scores. The instructions cause the one or more processors to select a route from the one or more potential routes based on the route scores. The instructions also cause the one or more processors to provide information associated with the route to the second device.

The features, functions, and advantages described herein can be achieved independently in various implementations or may be combined in yet other implementations, further details of which can be found with reference to the following description and drawings.

### BRIEF DESCRIPTION OF THE DRAWINGS

FIG. 1 is a block diagram that illustrates a system configured to determine a planned route for an APV based on trip details and one or more preferences provided by a customer and configured to schedule use of the APV.
FIG. 2 is a flow chart of a method for determining a planned route for an APV based on trip details and one or more preferences provided by a customer and for scheduling the use of the APV.
FIG. 3 is a block diagram of a computing environment including a computing device configured to support aspects of computer-implemented methods and computer-executable program instructions (or code) according to the present disclosure.

### DETAILED DESCRIPTION

An APV service provider may have a fleet of APVs that are available for hire by customers to carry passengers from start locations to destinations. A customer may hire an APV by accessing an automated ordering system of the APV service provider. The automated ordering system enables the customer to provide a day and time when the APV is needed, provide communication addresses associated with one or more passengers, designate a start location and a destination, designate a number of passengers, and provide trip preferences associated with the trip from the start location to the destination. The trip preferences may include certain limitations associated with routes (e.g., avoid use of toll roads and/or major highways for land vehicle travel, no extended travel over bodies of water for air vehicles, etc.), one or more preferences expressed as a preference score (e.g., importance to the customer on a scale from zero (no or low importance) to ten (high importance) regarding aspects of the trip such as cost, comfort, short trip time, small ecological impact, etc.), other preferences (e.g., include one or more points of interest along the route), or combinations thereof. The customer may be an end user of the APV (e.g., a passenger) or a passenger representative (e.g., a co-passenger, a travel agent, secretary, dispatcher, etc.). In some implementations, the customer may communicate directly with the automated ordering system. In other implementations, a representative of the APV service may be an intermediary between the customer and the automated ordering system.

After the automated ordering system obtains information for the trip from the customer, the automated ordering system determines if the APV service provider can accommodate the trip. The APV service provider may not be able to accommodate the trip based on APV availability, service availability in a region due to vehicle usage in the region, based on predicted or actual weather conditions, based on APV range limitations, based on location of the starting point or the destination (e.g., the location of the starting point or the destination are in geographically restricted areas or inaccessible areas where the APV cannot go), based on other factors, or combinations thereof. If the determination is that the trip cannot be accommodated, the automated ordering system or a human representative of the APV service provider may work with the customer to adjust the requirements of the trip (e.g., change the starting location, the destination location, etc.) to have a trip that the APV service provider can accommodate.

When the determination is that the trip can be accommodated, the automated ordering system may determine scores for one or more potential routes from the starting point to the destination based on the trip preferences, historical route data, historical data associated with trips having the same or similar preferences, simulated trip data, available access times at the starting point, the destination, or both, known route restrictions (e.g., road closures, geographically restricted air areas, etc.), other factors, or combinations thereof. The automated ordering system may select a potential route with a highest score as a planned route and determine information associated with the planned route (e.g., start time and date, estimated trip duration, estimated trip cost, etc.). When one or more of the trip preferences are different than default trip preferences, the automated ordering system may also determine information associated with a comparison route. The comparison route may be based on the default trip preferences. The default preferences may result in a trip that emphasizes a short usage time of the APV and low trip cost balanced with passenger comfort.

The automated ordering system may present the information for the planned route, and the comparison route if created, to the customer as one or more offers. The customer can accept the offer for the planned route, can accept the offer for the comparison route, can change one or more preferences to result in another planned route, or can decline the one or more offers. When an offer is accepted, the automated ordering system can arrange for payment, can reserve an appropriate APV, can provide information for the route corresponding to the offer to the appropriate APV, can file one or more plans for the trip (e.g., a flight plan to the starting location, a flight plan for the trip, and a flight plan to a particular location after completion of the trip when the APV is an aerial vehicle), can schedule an access time for a location (e.g., schedule a time for arriving at an airport or other location with scheduled access for APVs), inform the customer of changes for the trip (e.g., start time change, route change, arrival time change, etc.) based on changing circumstances from a time of acceptance of the trip to the start of the trip, schedule a satisfaction survey for one or more passengers, perform other tasks associated with the trip, or combinations thereof.

The automated ordering system facilitates customers hiring APVs for trips. A technical advantage associated with the automated ordering system is that the automated order system can account for customer preferences in determining a planned route for the APV. The use of customer-provided preferences may increase customer satisfaction by providing the customer with a sense of agency associated with the trip and by accommodating customer preferences during the trip. Another technical advantage is that feedback from passengers and/or route evaluation of a route based on sensor data from sensors of the vehicle are usable to determine customer satisfaction and ratings of customer satisfaction can be incorporated in historical route data used to determine routes for subsequent trips by the passengers, or other passengers, using the same or similar preferences. The feedback and/or route evaluation is filtered to remove data not associated with the route (e.g., problems associated with weather or unforeseeable events). The feedback and/or route evaluation enables selection of routes that are more likely to result in positive passenger experiences, which may lead to more frequent use, passenger loyalty, an increase in cost that passengers are willing to pay, or combinations thereof.

The figures and the following description illustrate specific exemplary implementations. It will be appreciated that those skilled in the art will be able to devise various arrangements that, although not explicitly described or shown herein, embody the principles described herein and are included within the scope of the claims that follow this description. Furthermore, any examples described herein are intended to aid in understanding the principles of the disclosure and are to be construed as being without limitation. As a result, this disclosure is not limited to the specific implementations or examples described below, but by the claims and their equivalents.

Particular implementations are described herein with reference to the drawings. In the description, common features are designated by common reference numbers throughout the drawings.

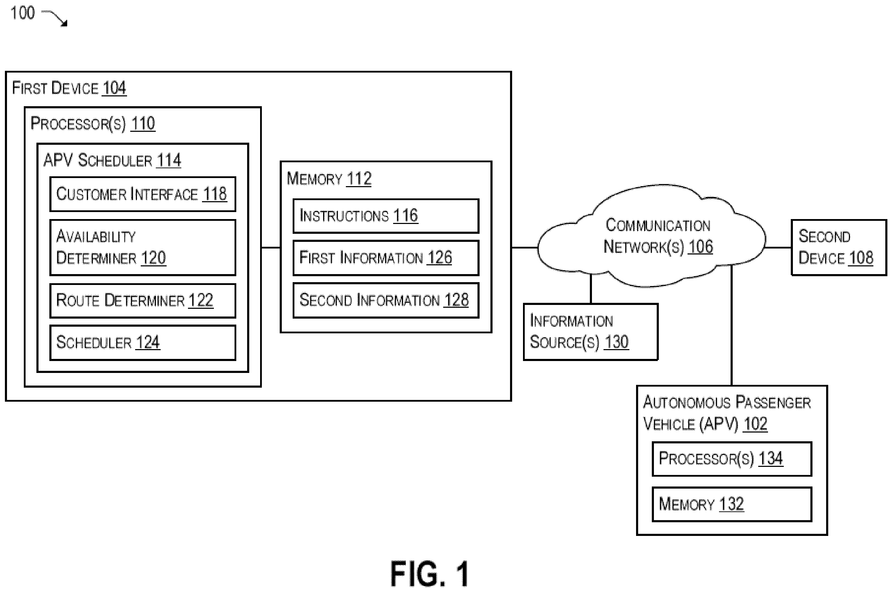

As used herein, various terminology is used for the purpose of describing particular implementations only and is not intended to be limiting. For example, the singular forms "a," "an," and "the" are intended to include the plural forms as well, unless the context clearly indicates otherwise. Further, some features described herein are singular in some implementations and plural in other implementations. To illustrate, FIG. 1 depicts a first device 104 including one or more processors ("processor(s)" 110 in FIG. 1), which indicates that in some implementations the first device 104 includes a single processor 110 and in other implementations the first device includes multiple processors 110. For ease of reference herein, such features are generally introduced as "one or more" features and are subsequently referred to in the singular or optional plural (as typically indicated by "(s)") unless aspects related to multiple of the features are being described.

The terms "comprise," "comprises," and "comprising" are used interchangeably with "include," "includes," or "including." Additionally, the term "wherein" is used interchangeably with the term "where." As used herein, "exemplary" indicates an example, an implementation, and/or an aspect, and should not be construed as limiting or as indicating a preference or a preferred implementation. As used herein, an ordinal term

(e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). As used herein, the term "set" refers to a grouping of one or more elements, and the term "plurality" refers to multiple elements.

As used herein, "generating," "calculating," "using," "selecting," "accessing," and "determining" are interchangeable unless context indicates otherwise. For example, "generating," "calculating," or "determining" a parameter (or a signal) can refer to actively generating, calculating, or determining the parameter (or the signal) or can refer to using, selecting, or accessing the parameter (or signal) that is already generated, such as by another component or device. As used herein, "coupled" can include "communicatively coupled," "electrically coupled," or "physically coupled," and can also (or alternatively) include any combinations thereof. Two devices (or components) can be coupled (e.g., communicatively coupled, electrically coupled, or physically coupled) directly or indirectly via one or more other devices, components, wires, buses, networks (e.g., a wired network, a wireless network, or a combination thereof), etc. Two devices (or components) that are electrically coupled can be included in the same device or in different devices and can be connected via electronics, one or more connectors, or inductive coupling, as illustrative, non-limiting examples. In some implementations, two devices (or components) that are communicatively coupled, such as in electrical communication, can send and receive electrical signals (digital signals or analog signals) directly or indirectly, such as via one or more wires, buses, networks, etc. As used herein, "directly coupled" is used to describe two devices that are coupled (e.g., communicatively coupled, electrically coupled, or physically coupled) without intervening components.

FIG. 1 is a block diagram that illustrates a system 100 configured to schedule use of an APV 102 and to determine a planned route for the APV 102 based on one or more preferences provided by a customer. The APV 102 may be aircraft (e.g., a vertical takeoff and landing vehicle, a helicopter, a quadcopter, etc.) that does not require a pilot in the aircraft, a land vehicle (e.g., a car, a van, a truck, etc.) or water vehicle (e.g., a boats) that does not require a driver in the vehicle, or combinations thereof.

The system 100 includes a first device 104 associated with an APV service provider. The first device 104 is configured to enable communication, via one or more communication networks 106, between the first device 104 and one or more second devices 108 associated with one or more customers that want to hire one or more of the APVs 102 associated with the APV service provider. A customer is a person requesting the use of an APV 102, and the customer may be a passenger of one or more passengers who will ride in the APV 102, or the customer may be a representative of the one or more passengers that will not use the APV 102. A second device 108 may be a smartphone, telephone, computer (e.g., a desktop computer, laptop computer, tablet computer, or other type of computer), dedicated device associated with APV service provider at a particular location (e.g., airport, hotel, etc.), other type of electronic device, or a combination thereof.

The first device 104 includes one or more processors 110 and memory 112. The processor(s) 110 include an APV scheduler 114 configured to obtain and/or retrieve information from a customer regarding use of an APV 102 for a trip. The memory 112 includes one or more computer-readable storage devices (e.g., non-transitory computer-readable media) that store instructions 116 that are executable by the processor(s) 110. The instructions 116 are executable to initiate, perform, or control operations described herein with reference to the APV scheduler 114. The memory 112 is also configured to store data used by, or generated by, the APV scheduler 114. The customer accesses the first device 104 via the second device 108 and utilizes the APV scheduler 114 to submit a service request for use of an APV 102.

The APV scheduler 114 may be implemented by execution of instructions (e.g., software). For illustrative purposes, functionality of the APV scheduler 114 is separated into units including a customer interface 118, an availability determiner 120, a route determiner 122, and a scheduler 124. In other implementations, the APV scheduler 114 may include no separation of functionality into units, may include fewer units that include units that combine particular functionality, or may include additional units to implement other functionality.

The customer interface 118 allows communication with the second device 108 associated with the customer via the communication network(s) 106 to schedule the use of a particular APV 102. The customer interface 118 may include an automated ordering system that allows direct communication between the first device 104 and the second device 108, enables indirect communication between the first device 104 and the second device 108 via a device associated with an APV service provider representative in communication with the second device 108, or both.

The customer interface 118 enables the first device 104 to provide information to the second device 108 and to receive other information from the second device 108. In some implementations, the information may be accessed as a webpage. The information may describe services provided by the APV service provider and limitations associated with the services. For example, general information may be presented regarding pricing for use of an APV 102, a maximum number of passengers per APV 102, a maximum number of items and weight of the items associated with each passenger, limitations and/or service fees associated with events (e.g., concerts, sporting events, conventions, etc.), a general service area, additional information, or combinations thereof. The information may specify that a route and a cost for the route may be determined for a trip. The information may also specify that the trip for a route may be canceled, the route and/or the cost may be subject to change based on actual, or forecasts of, conditions (e.g., weather) for the time and date of the trip, based on circumstances during the trip (e.g., accidents along the route accepted by the customer), based on other factors, or combinations thereof.

The information may also specify that an attempt will be made to honor preferences specified by the customer, but circumstances during the trip may prohibit honoring one or more of the preferences. For example, a customer may specify a preference of a short trip duration at the expense of comfort, but traffic conditions during the trip (e.g., traffic slowdown due to an accident) may prohibit a short trip duration during the actual trip so the actual trip time is significantly longer than an estimated trip duration for the route. As another example, a customer may specify a priority for comfort, but the APV 102 response during the trip to actions of other vehicles may require rapid acceleration or deceleration that does not prioritize comfort.

When the customer decides to plan a trip using an APV 102 of the APV service provider, the customer may connect to the first device 104 via the second device 108 and the customer interface 118 may query the customer for information corresponding to customer information and trip details. Information obtained by the first device 104 for the customer may be saved as first information 126 in a database or other data structure in the memory 112. The first information 126 may include the customer information (e.g., a customer identifier, customer name and/or passenger names, one or more communication addresses associated with the customer and/or the passengers where information regarding the trip is to be sent, trip preferences for the trip, etc.); the trip details (e.g., proposed date and time, proposed starting location, proposed destination, number of passengers, etc.); other information associated with the customer, passengers, and the trip; or combinations thereof.

In some implementations, the customer interface 118 may require entry of a username and password. For a new customer, upon creation of the username and password, the customer interface 118 may present queries for the customer information and the trip details. The queries may present default values for preferences that the customer can accept or modify to their own preferences. For a returning customer, values for responses associated with the customer information and preferences may be retrieved from the first information 126 and presented to the second device 108. The returning customer may accept or modify one or more entries for the customer information and the preferences. Both new customers and returning customers are prompted with queries for information corresponding to the trip details (e.g., desired date and time, proposed start location, proposed destination, number of passengers, etc.).

If the customer frequently hires an APV 102 for one or more recurring trips (e.g., a trip that the customer has made two or more times that has the same starting location, destination, and preferences), the customer is presented with information identifying each recurring trip (e.g., starting location and destination, number of times selected, when last selected) and a selectable option associated with each recurring trip. If the customer selects a selectable option for a particular recurring trip, the APV scheduler 114 requests the proposed date, the time for the trip, and a number of passengers; and, after a determination that the trip can be accommodated by one of the APVs 102, the scheduler presents an offer for the particular recurring trip on the date including a start time for the trip, an estimated trip duration, an estimated cost for the trip, a map of route, or combinations thereof. An ability to quickly choose a recurring trip may promote customer satisfaction and repeat usage.

The queries presented by the customer interface 118 may include prompts for preferences for the trip. Some of the preferences may allow the customer to select preference scores. Each preference score corresponds to a number on a scale for a preference of the customer regarding a topic. For example, some queries may ask the customer to provide a priority on a scale from zero to ten for importance of passenger comfort, importance of short trip duration, importance of low cost, other preferences, or combinations thereof. Other scales may also be used. As another example, a series of questions (e.g., are any passengers susceptible to motion sickness, how comfortable are passengers with flying over water on a scale from zero to ten, how comfortable are passengers with a high cruising altitude on a scale from zero to ten and how comfortable with a low cruising altitude on a scale from zero to ten, etc.) are asked and answers to the series of questions may be used by the route determiner 122 to determine one or more preferences associated with comfort for the trip. Default values for the answers to queries may be provided, and the customer can modify the default values to better reflect the preferences of the customer and/or passengers. In some implementations, preferences associated with a scale may be presented graphically and a user can move a slide to position a particular preference to a desired value.

In some implementations, the preferences are interconnected such that customer adjustment of a particular preference causes a change in the value presented for one or more other preferences based on one or more rules stored in the memory 112. For example, an increase in the preference of comfort may cause a decrease in the preference value presented for short trip duration, an increase in the preference value presented for low cost, changes to one or more other default preference values, or combinations thereof. In other implementations, conflicts associated with preferences entered by the customer are adjusted by the APV scheduler 114 when applying the preferences based on application of the rules stored in the memory 112 without change of one or more preference values presented to the customer. For example, if the preference for short trip duration and the preference for comfort are both maximized by the customer, the rules may specify use of the default values for the short trip time preference and the comfort preference when the APV scheduler 114 applies the preferences to determine a route for the trip, and the values for the preference for short trip duration and the preference for comfort presented to the customer by the customer interface 118 remain maximized.

During use of the customer interface 118 to obtain the information from the second device 108, the customer may select an option to have a route that includes particular scenery to allow the passenger(s) to view one or more particular sites (e.g., particular locations, or particular sites of interest such as historical sites, distinctive architecture, nature scenery, etc.). Data about sites to be included in the route may be saved to the memory 112 as part of the first information 126. The customer may be presented with, and can select, one or more general categories of known sites of interest (e.g., historic landmarks, nature scenery, etc.) that can be included in a route from the start location to the destination. If the customer selects a general category, the customer can be presented with, and can select, one or more particular sites associated with the general category. For example, the customer may select the general category of historical sites, and the customer interface may present a list of selectable historical sites that can be included in the planned route for the trip. In addition, the customer may be able to enter a particular location to be included in the route from the start location to the destination location.

A route selected by the first device 104 will include locations or sites of interest selected by the customer if feasible. Inclusion of particular locations or sites may not be feasible due to geographical restrictions associated with APVs 102, due to vehicle range limitations, other factors, or combinations thereof. If locations or sites of interest selected by the customer are not feasible, an explanation of why the locations or sites of interest are not included in the route may be provided in information sent to the customer that specifies the proposed route for the trip. For example, if the customer preferences specify that a short trip duration is preferred (e.g., short trip duration is rated 7 out of 10), and the sites include a first site that is between the starting location and the destination, and a second site that is 20 km beyond the destination, the information provided to the customer with the proposed route may specify that the first site is included in the route but the second site is not included in the route because passing by the second site would add an additional 40 minutes to the trip time. The customer interface may also provide an option that allows the customer to choose to include the second site in the route despite the additional trip time, and if selected, the APV scheduler 114 determines a new proposed route that includes the second site.

For some sites of interest, the sites of interest may be included in the proposed route so that passenger(s) in the vehicle can view the sites of interest on the way to the destination. For other sites of interest, the APV 102 is able to stop at the site of interest for a period of time specified by the customer (e.g., 15 minutes, 30 minutes, an hour, or some other period of time) and allow the passenger(s) to exit the APV 102 during the period of time.

The availability determiner 120 determines whether the APV service provider can provide an APV 102 for use by the customer. In some situations, the customer cannot hire an APV 102 because all available APVs 102 have been previously hired for the day and time requested by the customer, there are no available routes from the starting location to the destination due to previously scheduled trips for a particular time block that includes the requested time for the trip, etc. In such situations, the customer interface 118 informs the customer via the second device 108 that the APV service provider cannot provide an APV 102 for the trip.

If the availability determiner 120 determines that there is no availability based on one or more adjustable variables (e.g., one or more of proposed time, proposed start location, and proposed destination), the availability determiner 120 causes the customer interface 118 to obtain additional information from the second device 108 that may allow the APV service provider to accommodate the trip. For example, if the availability determiner 120 determines that a location (e.g., a proposed starting point or a proposed destination) is not valid for an APV 102, the availability determiner 120 may cause the customer interface 118 to inform the customer via the second device 108 that the location is not valid and may provide selectable options for one or more nearby locations that are valid. In particular, a customer may provide a residential address as a start location for a trip via an aerial APV 102, and the availability determiner 120 may determine that APV geographical restrictions, foliage, buildings, power lines, other types of obstructions, or combinations thereof, at the residential address prohibit landing of the aerial APV 102 at a property associated with the residential address. In response, the availability determiner 120 may cause the customer interface 118 to request information from the customer to determine a valid start location.

When the availability determiner 120 determines that the trip can be accommodated, the availability determiner 120 causes the route determiner 122 to determine a proposed route for the trip. The route determiner 122 determines second information 128 associated with the trip requested by the customer that corresponds to the first information 126. The second information may be stored in the same database or other data structure as the first information 126, or in a different database or data structure. The route determiner 122 may determine one or more first routes (e.g., potential routes) from the starting location to the destination for a start time based on a proposed time obtained from the first information 126, limitation data associated with available APVs 102 (e.g., geographical restrictions, range limitations, etc.) retrieved from the memory 112, information from one or more information sources 130 (e.g., temporary geographical restrictions), or combinations thereof. For an aerial APV 102, the information source(s) 130 (e.g., traffic control source(s)) provide estimated location information based on submitted flight plans regarding locations for aerial vehicles that are scheduled to be in flight. The estimated location information may be utilized in one or more simulations of potential routes to avoid proximity conflicts between the APV 102 and other aerial vehicles.

The route determiner 122 may also determine route information associated with each of the one or more first routes (e.g., estimated trip duration, estimated cost, an estimated comfort score based on an estimate of a number of direction changes and speed changes for the route, etc.). The one or more first routes may be based on the preferences (e.g., limited flight time over water, route to allow the passenger(s) to view or visit one or more selected sites, preference scores, etc.), available routes for APVs 102 based geographical restrictions for APVs 102, predicted weather based on historical data and/or weather forecasts, historical route data and traffic patterns associated with the time for the trip, historical data associated with trips having the same or similar customer preferences, simulated trip data, available access times at the starting point, the destination, or both, other factors, or combinations thereof. The available routes for APVs 102 may take into consideration information associated with other APVs 102 and vehicles that are scheduled to be in the same area as the proposed trip, established geographical restrictions associated with APVs 102 (e.g., no flight within certain distances of prisons, hospitals, etc.), temporary geographical restrictions for APVs 102 (e.g., road closures, geographical restrictions defined by one or more aviation authorities, etc.), APV range limitations, APV fuel or battery power limitations, other factors, or combinations thereof.

The route determiner 122 may generate a numerical score for each of the one or more first routes based on a set of rules that utilize the preferences and the route information. The route determiner 122 may select the route with the highest score as a proposed route and designate route information associated with the proposed route as proposed route information. In some implementations when the APV 102 is an aerial vehicle, the route determiner 122 submits flight plans associated with the proposed route to reserve the proposed route. The flight plans may include a first flight plan from a first APV depot or other location to the start location, a flight plan for the route from the start location to the destination, and a third flight plan from the destination to a second APV depot (e.g., the first depot or a different APV depot) or other location. Should the customer subsequently not choose the proposed route, or if the proposed route is accepted but the trip is subsequently canceled, the APV scheduler 114 cancels flight plans.

The route determiner 122 may also determine one or more comparison routes and comparison route information using second preferences that are different than the preferences represented in the first information 126. In some implementations when the preferences include one or more locations or sites of interest selected by the customer, the second preferences also include the one or more locations or sites of interest. In other implementations when the preferences include one or more locations or sites of interest selected by the customer, the second preferences do not include the one or more locations or sites of interest.

The second preferences may correspond to default preferences when the preferences deviate from the default preferences. If the preferences correspond to the default preferences, the second preferences may be generated by adjusting one or more values of the preferences represented in the first information 126 (e.g., increasing a preference value associated with having low trip cost, or increasing a value associated with passenger comfort). To determine the comparison route, the route determiner 122 determines one or more second routes based on the second preferences and route information for the one or more second routes, determines scores for the one or more second routes, and selects the second route with the highest score as the comparison route and the route information for the comparison route as the comparison route information. In other implementations, the route determiner 122 may determine more than one comparison route, or the route determiner may not determine a comparison route. In some implementations when the APV 102 is an aerial vehicle, the route determiner 122 submits flight plans associated with each of the comparison route(s) to reserve the comparison route(s). The APV scheduler 114 subsequently cancels any of the flight plans corresponding to comparison routes not selected by the customer.

The proposed route, proposed route information, comparison route(s) and comparison route information may be associated with the customer and saved in the second information 128. If the proposed route is counter to one or more of the preferences specified by the customer (e.g., one or more sites specified by the customer are not included in the proposed route, customer comfort is not prioritized for a portion of the route due to a need to conform to estimated traffic, etc.), the route determiner 122 stores a reason for each of the one or more preferences that are countered by the proposed route as a portion of the second information 128 associated with the proposed route.

After the proposed route and the comparison route(s) are determined, the route determiner 122 causes the customer interface 118 to provide an offer to the customer via the second device 108. The offer includes data from the second information 128 including proposed route data and comparison route data. The proposed route data includes the start time and date of the trip, estimated trip duration, estimated cost of the trip, a map of the proposed route, reasons why one or more preferences are countered for the trip or a portion of the trip, or combinations thereof. The same type of information is also presented for a comparison route(s). The customer can accept the proposed route, can accept one of the comparison route(s), can choose to have another proposed route determined based on changes associated with the trip (e.g., changes to proposed starting location, proposed destination, proposed time, etc.) or changes to the preferences, or the customer can end communication with the first device 104 via the second device 108. For example, a user may specify that a short trip duration is a top priority (i.e., a priority of 10 out of 10) at the expense of cost (i.e., a priority of 2 out of 10) and comfort (i.e., a priority of 3 out of 10). The information provided for the proposed route may include an estimate travel time of 15 minutes and a first cost, and the information provided for the comparison route that uses default trip preferences includes an estimated travel time of 20 minutes and a second cost that is twice the first cost (e.g., due to one or more service fees for a fast trip). The customer may choose the proposed trip, may choose the comparison trip if an earlier estimated arrival time of five minutes is not worth the extra cost, may choose to change the preferences to have the APV scheduler 114 determine another proposed route based on a different set of preferences, or terminate communication with the first device 104 without reserving the APV 102 for the trip.

When the customer interface 118 receives acceptance of an offer corresponding to a particular route (e.g., a proposed route or a comparison route) from the customer via the second device 108, the customer interface 118 saves the accepted route and information associated with the accepted route in the second information 128. The customer interface 118 causes the scheduler 124 to reserve a particular APV 102 to implement the trip for the customer, provides information to the customer via the second device 108 and/or a customer communication address and/or device specified in the first information 126, establishes payment for the trip, and provides trip information from the second information 128 to the particular APV 102 associated with the trip. The scheduler 124 may also schedule a satisfaction survey with one or more of the passenger(s) soon after the trip (e.g., the day of the trip or the next day) via one or more communication devices specified in the first information 126. Each satisfaction survey requests feedback information for the trip from a passenger that was on the trip in the particular APV 102.

The information provided to the customer specifies the trip details for the trip accepted by the customer. The trip details may include a time that the particular APV 102 will arrive at the starting location on the scheduled day, an estimate of when the particular APV 102 will depart the starting location, the destination, and an estimated travel time to the destination. The scheduler 124 requests, via the customer interface 118, details for payment (e.g., credit card information) for the trip.

The scheduler 124 causes data, from the second information 128, to be sent (e.g., downloaded) to a memory 132 of the particular APV 102 associated with the trip. The data includes first trip details from an initial location to the starting location, second trip details associated with the trip, and third trip details associated with a second destination of the particular APV 102 after completion of the trip. One or more processors 134 of the APV 102 are configured to use the information stored in the memory 132 to implement the trip.

The first trip details include a first route and an arrival time at the starting location of the trip. The second trip details include the accepted route, the arrival time, the starting location, the destination, and one or more limitations associated with the trip based on the preferences included in the first information 126. For example, if the preferences provided by the customer prioritize passenger comfort above a default level of comfort, the data includes reduced limitations for acceleration, deceleration, maximum speed, or combinations thereof, that are lower than corresponding default limitations associated with comfort. The data may also include additional limitations (e.g., a particular turn radius and turn time for non-limited turns that is more comfortable than a default turn radius and turn time) that promote passenger comfort when the preference indicate a comfort preference above a default comfort preference. Such limitations may be exceeded when non-normal operating conditions occur. As another example, if the customer preferences indicate a preference for a short trip duration that is higher than a default short trip duration preference, the data includes limitations for acceleration, deceleration, maximum speed, other limitations, or combinations thereof, that are higher than corresponding default limitations in order to reduce trip time during the trip. The third trip details include a second route and the second destination for the particular APV 102 after arrival at the destination of the trip and exit of the passenger(s) from the particular APV 102.

The scheduler 124 schedules satisfaction survey(s) with one or more of the passenger(s) soon after the trip (e.g., the day of the trip or the next day) via one or more communication addresses and/or communication devices associated with passenger(s) of the trip specified in the first information 126. Possible routes for a trip requested by a customer are scored at least partially based on prior trip histories for trips associated with the same or similar preferences. Information associated with prior trip histories is obtained from sensors of the APVs 102 (e.g., accelerometers, global positioning systems (GPS), camera systems, etc.), passenger feedback as answers to questions presented to passengers in customer satisfaction survey(s), or both, and the information is used to determine one or more satisfaction scores associated with preferences for the trip (e.g., first satisfaction scores based on passenger feedback, and second satisfaction scores based on sensor data from the APV 102). The satisfaction scores may be binary values (e.g., a value of 1 when a preference (e.g., no extended flight over water) was satisfied and a value of zero when the preference was not satisfied), numerical values (e.g., for preferences expressed as preference scores), or combinations thereof. The satisfaction scores based on passenger feedback are stored as a first portion of an entry of historical route data and satisfaction scores based on sensor data are stored a second portion of an entry of historical route data. Other portions of an entry of historical route data include details of the route, temporal details associated with the trip, and information associated with the trip. The historical data is used by the route determiner 122 in determining scores for potential routes.

Determined satisfaction scores may be adjusted to filter out impacts not attributable to the route. For example, sensor data and/or passenger feedback may indicate that the comfort associated with a particular trip was low and the sensor data may be analyzed to determine that low comfort is attributable to one or more sudden stops and/or maneuvers during the trip due to responses of the APV 102 to other vehicles. The low comfort associated with the trip is filtered out so that the low comfort score is not indicated in the satisfaction score associated with comfort because the low comfort score for the trip was not due to the choice of route. As another example, if the sensor data and/or passenger feedback indicated low comfort due to excessive speed for a large portion of the trip due to the particular APV 102 adapting to nearby traffic patterns, the satisfaction score associated with comfort is not adjusted to filter out the low score associated with comfort because the low score is attributable to the route.

The APV scheduler 114 monitors information source(s) 130 (e.g., traffic control system(s), weather sensors and/or weather forecast sources, etc.) for changes that affect scheduled trips. For example, road closures, traffic slowdowns and stoppages, temporary geographical restrictions, changes to geographical restrictions, predicted or actual inclement weather, etc., may result in cancelation or change of route of one or more scheduled trips before implementation of the scheduled trip or may result in changes during implementation of the scheduled trip (e.g., implementation of a different route than the accepted route). Changes to routes based on information from the information sources are determined by the route determiner 122 and are substituted for corresponding information in the second information 128 and are provided to the particular APV 102 designated to implement the trip.

Cancelations and significant trip changes (e.g., changes that result in a time delay of more than 10 minutes, 30 minutes, or some other amount of time or that will result in more than a 5%, 10%, or other percentage increase in cost) are sent to communication addresses and/or communication devices associated with the trip identified in the first information 126 for customers and/or passengers associated with the scheduled trips. For significant changes determined before implementation of the trip, an option to cancel the trip may be included. If the trip is canceled, the APV scheduler provides information to appropriate entities (e.g., the particular APV 102 scheduled for the trip, traffic control source(s), etc.) to cancel implementation of the trip. Particular rules of the APV scheduler 114 are used to determine when changes to trips are significant to avoid customer dissatisfaction due to perceived unnecessary communications associated with minor issues.

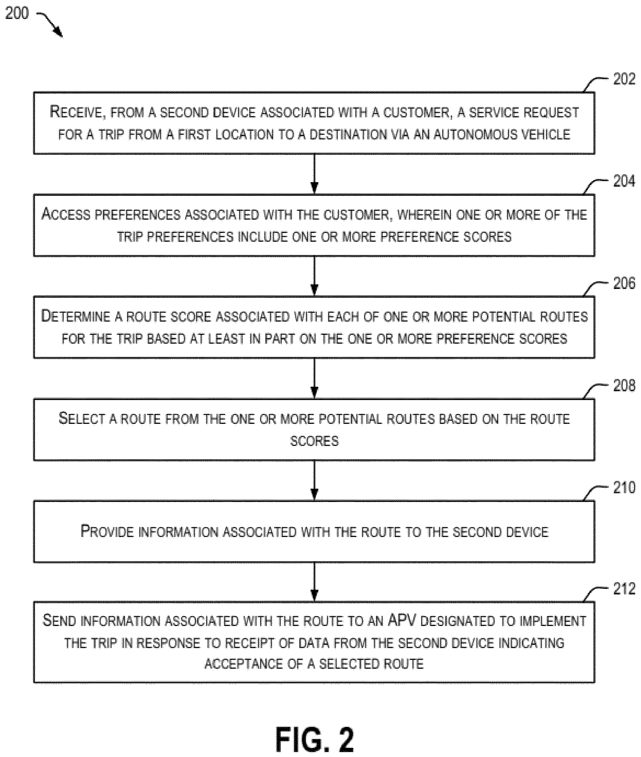

FIG. 2 is a flow chart of a method 200 for planned route determination for an APV. The method 200 may be implemented by the first device 104 of FIG. 1. The method 200 includes, at block 202, receiving, from a second device associated with a customer, a service request for a trip from a first location to a destination via an APV. For example, the second device 108 associated with the customer accesses the first device 104 via the communication network(s) 106. The second device 108 and the first device 104 communicate information including the customer sending a service request via the second device 108 for a trip using an APV 102 and details associated with the trip including the first location where the trip starts for passenger(s) of the trip and the destination of the trip.

The method 200 includes, at block 204, accessing preferences for the trip associated with the customer. One or more of the preferences include one or more preference scores. For example, the first device 104 queries the customer for information regarding passengers of the trip and trip details. The information regarding the passengers includes preferences for the trip. The preferences may include preferences that correspond to limitations (e.g., avoid the use of highways and/or toll roads) and other preferences may be preference scores that corresponds to a number on a scale for a preference regarding a topic (e.g., importance of low cost, short trip duration, comfort, etc.). The information regarding the passengers may also include a request for a communication address for passenger(s) associated with the trip. The trip details include a proposed date and start time for the trip, the first location, the destination, and a number of passengers.

The method 200 includes, at block 206, determining a route score associated with each of one or more potential routes for the trip based at least in part on the one or more preference scores. For example, the device 104 determines one or more potential routes, route scores, and route information associated with the routes (e.g., estimated trip duration, estimated cost, comfort level, etc.) from the starting location to the destination for start times associated with the proposed start time using scoring rules stored in the memory 112 that adjust scores based on adherence to or deviation from the preferences. The potential routes and the scoring is based on the preferences including the preference scores and is further based on the route information, limitations associated with APVs 102 (e.g., range limitations, geographical restrictions, etc.), available routes, historical route data for trips with the same or similar preferences, data associated with the trip from information sources 130 (e.g., weather forecasts, temporary geographical restrictions, traffic patterns for a region associated with the trip, etc.), other information, or combinations thereof.

The method 200 includes, at block 208, selecting a route from the one or more potential routes based on the route scores. For example, the first device 104 selects a route with the highest score as the route. Additionally, the first device 104 may determine a second set of preferences for the trip that are different from the preferences provided by the customer (e.g., default preferences when the preferences provided by the customer deviate from the default preferences) and determine one or more comparison routes based on the second set of preferences.

The method 200 includes, at block 210, providing information associated with the route to the second device. For example, the first device 104 provides the second device 108 with information associated with the route including a start time, an estimated trip duration, an estimated cost, a map of the route, a summary of the preferences, other information, or combinations thereof. The first device 104 also provides the second device 108 with information associated with the comparison route(s) (e.g., a start time, an estimated trip duration, an estimated cost, a map of the route, a summary of the preferences, other information, or combinations thereof for each comparison route) so that the customer can have a sense of how the customers preferences influence cost and trip duration associated with the trip and multiple trip options to choose from.

The method 200 also includes, at block 212, providing information about a selected route to an APV designated to implement the trip responsive to receipt of data from the second device indication acceptance of a selected route. For example, the first device 104, upon receipt of information from the second device 108 indicating selection of a selected route for the trip, facilitates implementation of the trip. Facilitating implementation of the trip includes scheduling the trip in response to receipt of acceptance of a particular device from the second device 108. Facilitating implementation of the trip may include the first device 104 providing information associated with the trip to appropriate entities (e.g., submission of one or more flight plans for an aerial APV 102), providing information to an APV 102 designated to implement the trip, and providing information to the customer and/or passengers associated with the trip. The particular APV 102 receives trip details (e.g., the date and start time of the trip, the first location, a departure time to travel to the first location and a first route to the first location, the destination, a number of passengers for the trip, the selected route, operation limitations (e.g., acceleration limits, deceleration limits, maximum speed, etc.) that are different than normal operation limits based on the preferences, other information, or combinations thereof). The first device 104 also provides information to one or more communication addresses and devices associated with the customer and/or passengers and obtains information that enables payment for the trip. The information provided to the one or more communication addresses and devices includes details of the trip (e.g., date and start time, number of passengers, estimated trip duration, other information, or combinations thereof.

In some implementations, the method 200 can include more, fewer, and/or different steps than those described above. For example, the method 200 may include determining a change to the route after acceptance of the route. The method 200 may also include sending an indication of the change to a communication addresses, communication device, or both, associated with a passenger for the trip.

In addition, the method 200 may include scheduling a request for feedback to be sent to one or more communication addresses associated with passenger(s) designated by the customer to be on the trip. After the trip is implemented, the method 200 may also include receiving passenger feedback associated with the trip, vehicle data for the trip from sensors of the APV 102, or both. The method 200 may include determining first satisfaction scores associated with the preferences based on the passenger feedback and determining second satisfaction scores associated with the preferences based on the vehicle data. The first satisfaction scores and the second satisfaction scores may be adjusted to filter out impacts not attributable to the route. The method 200 may include storing the first satisfaction scores, the second satisfaction scores, a portion of the vehicle data, or combinations thereof, as portions of an entry of historical route data.

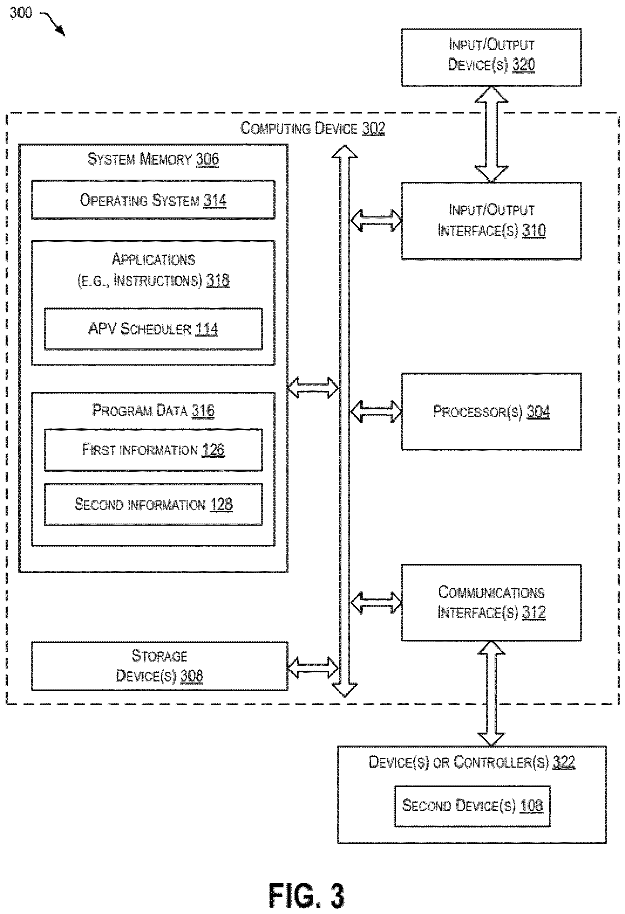

FIG. 3 is a block diagram of a computing environment 300 including a computing device 302 configured to support aspects of computer-implemented methods and computer-executable program instructions (or code) according to the present disclosure. For example, the computing device 302, or portions thereof, is configured to execute instructions to initiate, perform, or control one or more operations described with reference to FIGS. 1 and 2.

The computing device 302 includes one or more processors 304. The processor(s) 304 are configured to communicate with system memory 306, one or more storage devices 308, one or more input/output interfaces 310, one or more communications interfaces 312, or any combination thereof. The system memory 306 includes volatile memory devices (e.g., random access memory (RAM) devices), nonvolatile memory devices (e.g., read-only memory (ROM) devices, programmable read-only memory, and flash memory), or both. The system memory 306 stores an operating system 314, which may include a basic input/output system for booting the computing device 302 as well as a full operating system to enable the computing device 302 to interact with users, other programs, and other devices. The system memory 306 stores system program data 316, such as any data used or generated by the system 100, one or more modules, one or more machine learning models, or a combination thereof, as described with reference to FIGS. 1 and 2. For example, the system program data 316 stores the first information 126 and the second information 128/

The system memory 306 includes one or more applications 318 (e.g., sets of instructions) executable by the processor(s) 304. As an example, the one or more applications 318 include instructions executable by the processor(s) 304 to initiate, control, or perform one or more operations described with reference to FIGS. 1 and 2. To illustrate, the one or more applications 318 include the APV scheduler 114 of FIG. 1.

In a particular implementation, the system memory 306 includes a non-transitory, computer readable medium storing the instructions that, when executed by the processor(s) 304, cause the processor(s) 304 to initiate, perform, or control operations to enable a customer to hire an APV and determine a route for a trip for the APV from a first location to a destination. The operations include facilitating the trip by providing information to the customer and/or passenger(s) who will use the APV and providing information for the trip to the APV.

The one or more storage devices 308 include nonvolatile storage devices, such as magnetic disks, optical disks, or flash memory devices. In a particular example, the storage devices 308 include both removable and non-removable memory devices. The storage devices 308 are configured to store an operating system, images of operating systems, applications (e.g., one or more of the applications 318), and program data (e.g., the program data 316). In a particular aspect, the system memory 306, the storage devices 308, or both, include tangible computer-readable media (e.g., one or more storage devices) and are not merely signals. In a particular aspect, one or more of the storage devices 308 are external to the computing device 302.

The one or more input/output interfaces 310 enable the computing device 302 to communicate with one or more input/output devices 320 to facilitate user interaction. For example, the one or more input/output interfaces 320 can include a display interface, an input interface, or both. For example, the input/output interface 310 is adapted to receive input from a user, to receive input from another computing device, or a combination thereof. In some implementations, the input/output interface 310 conforms to one or more standard interface protocols, including serial interfaces (e.g., universal serial bus (USB) interfaces or Institute of Electrical and Electronics Engineers (IEEE) interface standards), parallel interfaces, display adapters, audio adapters, or custom interfaces ("IEEE" is a registered trademark of The Institute of Electrical and Electronics Engineers, Inc. of Piscataway, New Jersey). In some implementations, the input/output device(s) 320 include one or more user interface devices and displays, including some combination of buttons, keyboards, pointing devices, displays, speakers, microphones, touch screens, and other devices.

The processor(s) 304 are configured to communicate with devices or controllers 322 via the one or more communications interfaces 312. For example, the one or more communications interfaces 312 can include a network interface. The devices or controllers 322 can include, for example, second devices 108 of FIG. 1 associated with customers.

In some implementations, a non-transitory, computer readable medium stores instructions that, when executed by one or more processors, cause the one or more processors to initiate, perform, or control operations to perform part or all of the functionality described above. For example, the instructions may be executable to implement one or more of the operations or methods of FIGS. 1 and 2. In some implementations, part, or all of one or more of the operations or methods of FIGS. 1 and 2 may be implemented by one or more processors (e.g., one or more central processing units (CPUs), one or more graphics processing units (GPUs), one or more digital signal processors (DSPs)) executing instructions, by dedicated hardware circuitry, or any combination thereof.

The illustrations of the examples described herein are intended to provide a general understanding of the structure of the various implementations. The illustrations are not intended to serve as a complete description of all of the elements and features of apparatus and systems that utilize the structures or methods described herein. Many other implementations can be apparent to those of skill in the art upon reviewing the disclosure. Other implementations can be utilized and derived from the disclosure, such that structural and logical substitutions and changes can be made without departing from the scope of the disclosure. For example, method operations can be performed in a different order than shown in the figures or one or more method operations can be omitted. Accordingly, the disclosure and the figures are to be regarded as illustrative rather than restrictive.

Moreover, although specific examples have been illustrated and described herein, it should be appreciated that any subsequent arrangement designed to achieve the same or similar results can be substituted for the specific implementations shown. This disclosure is intended to cover any and all subsequent adaptations or variations of various implementations. Combinations of the above implementations, and other implementations not specifically described herein, will be apparent to those of skill in the art upon reviewing the description.

The Abstract of the Disclosure is submitted with the understanding that it will not be used to interpretor limit the scope or meaning of the claims. In addition, in the foregoing Detailed Description, various features can be grouped together or described in a single implementation for the purpose of streamlining the disclosure. Examples described above illustrate but do not limit the disclosure. It should also be understood that numerous modifications and variations are possible in accordance with the principles of the subject disclosure. As the following claims reflect, the claimed subject matter can be directed to less than all of the features of any of the disclosed examples. Accordingly, the scope of the disclosure is defined by the following claims and their equivalents.

Particular aspects of the disclosure are described below in sets of interrelated Examples:
According to Example 1, a first device includes one or more processors configured to receive, from a second device associated with a customer, a service request for a trip from a first location to a destination via an autonomous passenger vehicle; access preferences for the trip, wherein one or more of the preferences include one or more preference scores; determine a route score associated with each of one or more potential routes for the trip based at least in part on the one or more preference scores; select a route from the one or more potential routes based on the route scores; and provide information associated with the route to the second device.
Example 2 includes the device of Example 1, wherein the one or more processors are further configured to present a selectable option associated with a recurring trip; and responsive to selection of the selectable option: request a data and start time for the recurring trip; and present an offer to the second device for the recurring trip on the date, wherein the offer includes a start time for the recurring trip, an estimated trip duration, an estimated cost for the trip, or combinations thereof.
Example 3 includes the device of Example 1 or Example 2, wherein the one or more processors are further configured to submit one or more flight plans associated with the trip including a flight plan for the route.
According to Example 4, a method includes receiving, at a computing device of an autonomous passenger vehicle (APV) service provider from a second device associated with a customer, a service request for a trip from a first location to a destination; accessing, by the computing device, preferences for the trip, wherein one or more of the preferences include one or more preference scores; determining, by the computing device, a route score associated with each of one or more potential routes for the trip based at least in part on the one or more preference scores; selecting, by the computing device, a route from the one or more potential routes based on the route scores; and providing, by the computing device, information associated with the route to the second device.
Example 5 includes the method of Example 4, and further includes: scheduling, by the computing device, the trip in response to receipt of acceptance of the route from the second device; and sending data, from the computing device to a particular APV designated to implement the trip, wherein the data includes the route.
Example 6 includes the method of Example 5, wherein the data includes limitations for acceleration, deceleration, maximum speed, or combinations thereof, that are lower than corresponding default limitations responsive to a preference score for comfort indicating a comfort preference above a default comfort preference.
Example 7 includes the method of Example 5, wherein the data includes limitations for acceleration, deceleration, maximum speed, or combinations thereof, that are higher than corresponding default limitations responsive to a trip preference score for trip time indicating importance of a short duration time above a default importance for a short trip duration.
Example 8 includes the method of any of Examples 5 to 7, wherein the data includes a first route to the first location.
Example 9 includes the method of any of Examples 4 to 8, and further includes: determining a change to the route after acceptance of the route; and sending an indication of the change to a communication addresses, communication device, or both, associated with a passenger for the trip.
Example 10 includes the method of any of Examples 4 to 9, and further includes: receiving passenger feedback associated with the trip; determining first satisfaction scores associated with the preferences based on the passenger feedback; adjusting one or more of the first satisfaction scores to filter out impacts not attributable to the route; and storing the first satisfaction scores as a first portion of an entry of historical route data.
Example 11 includes the method of any of Examples 4 to 10, and further includes: receiving vehicle data for the trip from sensors of the APV; determining second satisfaction scores associated with the preferences based on the vehicle data, wherein one or more of the second satisfaction scores are adjusted to filter out impacts not attributable to the route; and storing the second satisfaction scores and a portion of the vehicle data as a second portion of an entry of historical route data.
Example 12 includes the method of any of Examples 4 to 11, wherein said accessing the preferences includes: responsive to no previously received preferences being associated with the customer, save default values as the preferences; responsive to previously received preferences being associated with the customer, save the previously received preferences as the preferences; presenting the preferences to the second device to enable the customer to accept or modify the preferences; and replace a particular preference with a modified value received from the second device for each modified preference.
Example 13 includes the method of any of Examples 4 to 12, wherein the information includes a first cost and first travel time associated with the route and a second cost and a second travel time associated with a comparison route.
Example 14 includes the method of Example 13, where the comparison route corresponds to a route determined with default values for preferences when the preferences deviate from the default values.
Example 15 includes the method of any of Examples 4 to 14, wherein the preferences include one or more options associated with a cost of the trip, trip duration, scenery, passenger comfort, or a combination thereof.
Example 16 includes the method of Example 15, wherein options associated with passenger comfort include an option associated with an estimate of susceptibility of one or more passengers to motion sickness.
Example 17 includes the method of any of Examples 4 to 16, wherein the APV comprises an aerial vehicle.
Example 18 includes the method of Example 17, wherein the APV comprises a land vehicle.
According to Example 19, a non-transitory, computer readable medium comprising instructions that, when executed by one or more processors, cause the one or more processors to receive from a second device associated with a customer, a service request for a trip from a first location to a destination; access preferences for the trip, wherein one or more of the preferences include one or more preference scores; determine a route score associated with each of one or more potential routes for the trip based at least in part on the one or more preference scores; select a route from the one or more potential routes based on the route scores; and provide information associated with the route to the second device.
Example 20 includes the non-transitory, computer readable medium of Example 19, wherein the instructions further cause the one or more processors to send information associated with the trip to a particular autonomous vehicle designated to implement the trip after receipt of acceptance of the route from the second device.

## Claims

1. A first device (104) comprising:
one or more processors (110) configured to:
receive, from a second device (108) associated with a customer, a service request for a trip from a first location to a destination via an autonomous passenger vehicle (102);
access preferences for the trip associated with the customer, wherein one or more of the preferences include one or more preference scores;
determine a route score associated with each of one or more potential routes for the trip based at least in part on the one or more preference scores;
select a route from the one or more potential routes based on the route scores; and
provide information associated with the route to the second device.

2. The first device of claim 1, wherein the one or more processors are further configured to:
present a selectable option associated with a recurring trip; and
responsive to selection of the selectable option:
request a data and start time for the recurring trip; and
present to the second device an offer for the recurring trip on the date, wherein the offer includes a start time for the recurring trip, an estimated trip duration, an estimated cost for the trip, or combinations thereof.

3. The first device of claim 1 or 2, wherein the one or more processors are further configured to submit one or more flight plans associated with the trip including a flight plan for the route.

4. A method (200) comprising:
receiving (202), at a computing device (104) of an autonomous passenger vehicle (APV) service provider from a second device (108) associated with a customer, a service request for a trip from a first location to a destination;
accessing (204), by the computing device, preferences for the trip, wherein one or more of the preferences include one or more preference scores;
determining (206), by the computing device, a route score associated with each of one or more potential routes for the trip based at least in part on the one or more preference scores;
selecting (208), by the computing device, a route from the one or more potential routes based on the route scores; and
providing (210), by the computing device, information associated with the route to the second device.

5. The method of claim 4, further comprising:
scheduling, by the computing device, the trip in response to receipt of acceptance of the route from the second device; and
sending (212) data, from the computing device to a particular APV (102) designated to implement the trip, wherein the data includes the route.

6. The method of claim 5, wherein the data includes reduced limitations for acceleration, deceleration, maximum speed, or combinations thereof, that are lower than corresponding default limitations responsive to a preference score for comfort indicating a comfort preference above a default comfort preference.

7. The method of claim 5, wherein the data includes limitations for acceleration, deceleration, maximum speed, or combinations thereof, that are higher than corresponding default limitations responsive to a trip preference score for trip time indicating importance of a short duration time above a default importance for a short trip duration.

8. The method of any one of claims 5 to 7, wherein the data includes a first route to the first location.

9. The method of claim any one of claims 4 to 8, further comprising:
determining a change to the route after acceptance of the route; and
sending an indication of the change to a communication addresses, communication device, or both, associated with a passenger for the trip.

10. The method of any one of claims 4 to 9, further comprising:
receiving passenger feedback associated with the trip;
determining first satisfaction scores associated with the preferences based on the passenger feedback;
adjusting one or more of the first satisfaction scores to filter out impacts not attributable to the route; and
storing the first satisfaction scores as a first portion of an entry of historical route data.

11. The method of any one of claims 4 to 10, further comprising:
receiving vehicle data for the trip from sensors of the APV;
determining second satisfaction scores associated with the preferences based on the vehicle data, wherein one or more of the second satisfaction scores are adjusted to filter out impacts not attributable to the route; and
storing the second satisfaction scores and a portion of the vehicle data as a second portion of an entry of historical route data.

12. The method of any one of claims 4 to 11, wherein said accessing the preferences includes:
responsive to no previously received preferences being associated with the customer, save default values as the preferences;
responsive to previously received preferences being associated with the customer, save the previously received preferences as the preferences;
presenting the preferences to the second device to enable the customer to accept or modify the preferences; and
replace a particular preference with a modified value received from the second device for each modified preference.

13. The method of any one of claims 4 to 12, wherein the information includes a first cost and first travel time associated with the route and a second cost and a second travel time associated with a comparison route.

14. A non-transitory, computer readable medium comprising instructions that, when executed by one or more processors, cause the one or more processors to:
receive from a second device associated with a customer, a service request for a trip from a first location to a destination;
access preferences for the trip, wherein one or more of the preferences include one or more preference scores;
determine a route score associated with each of one or more potential routes for the trip based at least in part on the one or more preference scores;
select a route from the one or more potential routes based on the route scores; and
provide information associated with the route to the second device.

15. The non-transitory, computer readable medium of claim 14, wherein the instructions further cause the one or more processors to send information associated with the trip to a particular autonomous vehicle designated to implement the trip after receipt of acceptance of the route from the second device.
